# EUROPEAN PATENT APPLICATION

(11) **EP 2 333 495 A1**
(43) Date of publication of application: **15.06.2011**
(21) Application number: 09177083.4
(22) Date of filing: 25.11.2009
(51) Int. Cl.: G01F 1/66, G01F 15/14, G01F 15/18

(54) **Ultrasonic consumption flow meter with connection piece**

(71) Applicant: KAMSTRUP A/S, 8660 Skanderborg (DK)
(72) Inventor: Borring, Peter Nordlund, DK-7100, Vejle (DK)
(74) Representative: Plougmann & Vingtoft A/S

(57) **Abstract**

With a possible aim to provide an ultrasonic consumption flow meter 102 where precision of measurements can be improved while also providing a precise and consistent assembly and positioning of components of the flow meter, there is disclosed a flow meter housing 104 with a pair of holes 302 through a material thickness 412 of the housing, a pair of connection pieces, 112a and 112b, each connecting the flow meter housing and one ultrasound transducer 116. A connection piece is provided with a holder 702 for holding an ultrasound transducer and a base 706 for positioning the connection piece in the flow meter housing. An inner surface 404 of the base 706 has a geometry which, apart from an opening 406 leading towards the ultrasound transducer positioned in the holder, is the same or substantially the same as a geometry of an inner surface 408 of the flow meter housing.

## Description

### FIELD OF THE INVENTION

The invention relates to a consumption flow meter for measuring a consumption of fluid using ultrasound. The flow meter is equipped with a pair of connection pieces, and each connection piece is provided for connecting one or more ultrasound transducers with a housing of the flow meter.

### BACKGROUND OF THE INVENTION

A consumption flow meter of the type described herein can be used for measuring a flow of fluid, such as an amount of liquid or gas flowing into, through or out of a fluid system at a consumer, such as a household, a plurality of households or an industrial facility. Based on the measured amount, a bill of charge may be forwarded to the consumer. Thus, a suitable high precision and consistency of measuring results is to be achieved by such flow meters. Authorities in various regions or countries set their standard for the precision and consistency. A more specific use of the flow meter as described herein may be for measuring a flow of water above an amount of 10 cubic meters per hour.

In an ultrasonic flow meter the measuring results follow from transmitting and receiving ultrasound signals upstream and downstream of a flow direction in the flow meter and from the Doppler effect. Reference flow meters may suffer from one or more of the following disadvantages.

In pursuit of increased precision of measuring results, possibly while e.g. using less complex and/or cheaper ultrasound transducers, some flow meter constructions tend to become rather complex. Various means for increasing the precision may interfere in a non-preferred way with factors such as cost of producing and/or assembling and/or maintaining the flow meter. Still further, consistency of the measuring results during a life cycle of such reference consumption flow meters may tend to vary.

In consequence the present invention has been devised.

### SUMMARY OF THE INVENTION

It may be seen as an aim of the present invention to provide an improved ultrasonic consumption flow meter for measuring a consumption of fluid and an improved method of assembling an ultrasonic consumption flow meter for measuring the consumption of fluid. Preferably, the invention alleviates, mitigates or eliminates one or more of the above or other disadvantages singly or in any combination.

Still further, it may be seen as an aim of the invention to provide a consumption flow meter where precise and consistent measuring results may be achieved throughout numerous years of use of the flow meter while using rather simple means in an innovative way.

In particular, it may be seen as an aim of the invention to provide a consumption flow meter and a method of assembling such flow meter, which flow meter is far less costly to produce and assemble relative to previously seen flow meters, while achieving minimum the same or better measuring results.

Accordingly there is, in a first aspect, provided an ultrasonic consumption flow meter for measuring a consumption of fluid, the flow meter comprising
- a flow meter housing with a pair of through going holes going through a material thickness of the flow meter housing, each hole being perpendicular or substantially perpendicular to a flow direction, the flow direction running from an inlet to an outlet of the flow meter housing,
- a pair of ultrasound transducers,
- a pair of connection pieces, each connection piece connecting the flow meter housing and one of the ultrasound transducers of the pair of ultrasound transducers, wherein the connection pieces are casted and a connection piece is provided with
   - a holder for holding an ultrasound transducer, the holder having an acute angle relative to the flow direction,
   - a base for positioning the connection piece in the flow meter housing, the base having a size and a material thickness,
   - an inner surface with a geometry which, apart from an opening leading towards the ultrasound transducer, is the same or substantially the same as a geometry of an inner surface of the flow meter housing.

Thus an improved ultrasonic consumption flow meter is provided. The improvement may lie therein that when providing connection pieces and a flow meter housing as described, a flow meter providing precise and consistent measuring results throughout numerous years of use of the flow meter is obtained.

A possible advantage of providing the flow meter housing with the hole as described and the connection pieces with the base and the holder as described, is that the precision of measurements can be improved in that angles of the ultrasound transducers relative to each other are comprised and build in the flow meter components in a way which enables a hassle free, precise and consistent assembly and positioning of the components.

A possible advantage of providing the flow meter as described, and especially of providing the connection piece with an inner surface as described, is that hereby it is a possibility to provide an improved flow inside the flow of fluid meter housing.

A still further possible advantage of providing the flow meter as described is that while possibly enhancing the flow in the flow meter, a positioning precision of an ultrasound transducer relative to the flow direction, i.e. an angular position and direction of the ultrasound transducer, can be improved while also providing the possibility of improving a position precision of e.g. a distance of the ultrasound transducer from e.g. a centreline of the flow meter housing. The improved angular and position precision may as examples be provided by adapting the hole of the flow meter housing to fit at least a part of the connection piece and/or by using the inner or other dedicated surfaces of the connection piece to position the connection piece relative to the flow meter housing or relative to the hole in the flow meter housing or relative to the inner surface of the flow meter housing.

When the size of the base is the same, substantially the same or just slightly smaller than the hole in the flow meter housing, at least in a part of the material thickness of the base, it may be an advantage that this establishes a possible specific way of providing the position precision of the connection piece with an ultrasound transducer relative to the hole in the flow meter housing.

In one embodiment, the size of the whole or substantially the whole of the material thickness of the base is the same or just slightly smaller than the hole in the flow meter housing.

When the material thickness of the base, at least adjacent to a periphery of the base, is the same or substantially the same as the material thickness of the flow meter housing, as possible advantage is that welding of the connection to the flow meter housing along the periphery of the base of the connection piece can be improved.

When the base is provided with a lower part with a size which is the same, substantially the same or just slightly smaller than the hole in the flow meter housing and an upper part with a size which is larger than the hole in the flow meter housing, a possible advantage is that the upper part may be used as a flange for connecting the connection piece to the flow meter housing and/or for positioning connection piece relative to the direction of the hole. Accordingly, the upper part can be a flange partially extending over an outside surface of the flow meter housing and provided for connection of the connection piece to the flow meter housing, such as by screwing, gluing or welding the flange to the flow meter housing.

When an inner convexity or radius of the connection piece is the same or substantially the same as the convexity or inner radius of the flow meter housing, a possible advantage may be that hereby a more specific geometry for positioning the connection piece flush with the inner surface of the flow meter housing can be provided and/or an improved flow can be provided and/or an improved positioning of the connection piece relative to the flow direction and/or the to a centre of the flow meter housing can be provided.

This may follow by using positioning tools provided inside the flow meter housing during assembly of the flow meter. The positioning tools enable fixing the connection piece precisely relatively to the flow meter housing, such as by contacting the flow meter housing and the connection piece at dedicated positions. Such positions may be provided along the inner surface of the flow meter housing and the inner surface of the connection piece, but may alternatively or additionally be provided on the outside of the flow meter housing and on the outside of the connection piece. Inside is to be understood as on a side of the component in question which can normally not be seen when the flow meter is assembled, in contrary to outside which can normally be seen, 'from the outside', when the flow meter is assembled.

The present construction of the flow meter housing and the connection pieces may be particularly useful for flow meters where a plurality of ultrasound transducers are positioned for transmitting or receiving ultrasound signals either upstream or downstream, such as for holding two or more ultrasound transducers in order for the two or more ultrasound transducers to transmit and/or receive ultrasound in or from parallel or substantially parallel directions.

When the holder of the connection piece comprises a mounting surface which is dimensioned to receive a transducer cartridge, and the transducer cartridge is mountable on the mounting surface so as to use a pressure within the flow meter housing due to a flow of fluid in the flow meter housing for pressing the transducer cartridge towards the mounting surface, a possible advantage is that such advantageous mounting position may be achieved in the connection piece prior to a connection of the connection piece with the flow meter housing. The mounting position itself may be advantageous for various possible reasons, among others in that hereby a flow meter which is fluid tight for numerous years can be provided.

In accordance with a method aspect of the invention there is provided a method of assembling an ultrasonic consumption flow meter for measuring a consumption of fluid. The method comprises
- providing and positioning a flow meter housing with a pair of through going holes, each hole going through a material thickness of the flow meter housing, each hole being perpendicular or substantially perpendicular to a flow direction, the flow direction running from an inlet to an outlet of the flow meter,
- providing a pair of connection pieces, each for connecting the flow meter housing and an ultrasound transducer and
- mounting the ultrasound transducer in a holder for holding the ultrasound transducer in each of the connection pieces,
- mounting one of the connection pieces of the pair of connection pieces in one of the through going holes of the pair of through going holes by a movement of the connection piece parallel with a direction of the through going hole and into the through going hole,
- connecting the connection piece to the flow meter housing rigidly and fluid tightly.

The other connection piece of the pair of connection pieces is preferably assembled with an ultrasound transducer and mounted in the housing in the same way as claimed for the single connection piece described in the claim.

The invention according to the method aspect is particularly but not exclusively advantageous for providing a flow meter which is far less costly to produce and assemble relative to previously seen flow meters, while still achieving minimum the same or better measuring results with the finished flow meter when provided in an overall system for measuring a consumption of fluid.

When mounting the ultrasound transducer in the holder is provided through an opening in an inner surface of the connection piece and towards a mounting surface, the mounting surface being dimensioned to receive the transducer and for using a pressure within the flow meter housing due to a flow of fluid in the flow meter housing for pressing the transducer towards the mounting surface, a possible advantage is that an advantageous mounting surface as described is easily accessible prior to mounting the connection piece in the flow meter housing and prior to connecting the connection piece to the flow meter housing.

The inner surface is possibly or preferably not provided inside the flow meter housing when mounting the ultrasound transducer.

When the connection piece is provided with a base with a size, where the size of the base is the same, substantially the same or just slightly smaller than the hole in the flow meter housing, and wherein the method comprises inserting the base of the connection piece into the through going hole of the flow meter housing and stopping the insertion when a geometry of at least part of an inner surface of the connection piece is flush with at least part of an inner surface of the flow meter housing, a possible advantage is that an improved flow may be provided within the flow meter and/or that a simple and yet effective way of positioning the connection piece in the flow meter housing is provided.

When the inner surface of the connection piece is flush with the inner surface of the flow meter housing in both ends of the connection piece or on 2 or more or along each of four sides of the connection piece or even along the whole or substantially the whole periphery of the connection piece, both the angular position and the position of the connection piece relative to e.g. a centre of the flow meter housing is precisely known. When the position of the connection piece in the flow meter housing is precisely known, the position of one or more ultrasound transducers positioned in the holder of the connection piece is also precisely known.

A possible way of establishing a rigid and fluid tight connection between the flow meter housing and the connection piece is provided by welding the connection piece to the flow meter housing.

Providing the hole in the flow meter housing by laser cutting, such as laser cutting the hole with an edge suited for welding the connection piece to this edge of the flow meter housing, entails achievement of a method for providing the hole in a precise way. During the same process, the hole may concurrently be prepared for a subsequent welding process.

Mounting of the ultrasound transducer in the connection piece can be provided prior to welding the connection piece to the flow meter housing, depending on factors such as a size of an inlet or outlet or a length of the flow meter housing.

It must be understood that any advantage mentioned may be seen as a possible advantage provided by the invention, but it may also be understood that the invention is particularly, but not exclusively, advantageous for obtaining the described advantage. In general the various aspects and advantages of the invention may be combined and coupled in any way possible within the scope of the invention.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 is a side view of an ultrasonic consumption flow meter, and
FIG. 2 is a top view of the ultrasonic consumption flow meter shown in figure 1,
and
FIG. 3 is a cross sectional view A-A as indicated on figure 2, and
FIG. 4 is a cross sectional view B-B as indicated on figure 1, and
FIG. 5 is a cross sectional view C-C as indicated on figure 1, and
FIG. 6 is a perspective view of the flow meter, and
FIG. 7 is on the left side a view of a connection piece, and in the right side a cross sectional view C-C as indicated on the left side of figure 7,
FIG. 8 is on the left side a view of a cross sectional view B-B of the connection piece as indicated on the side view on the right side of figure 8, and
FIG. 9 in an end view and a top view of the connection piece and
FIG. 10 is an embodiment of the connection piece where an acute angle between a base and a holder of the connection piece is increased, and
FIG. 11 is an illustration of a further embodiment of the connection piece which includes a base with a lower and upper part.

### DESCRIPTION OF EMBODIMENTS

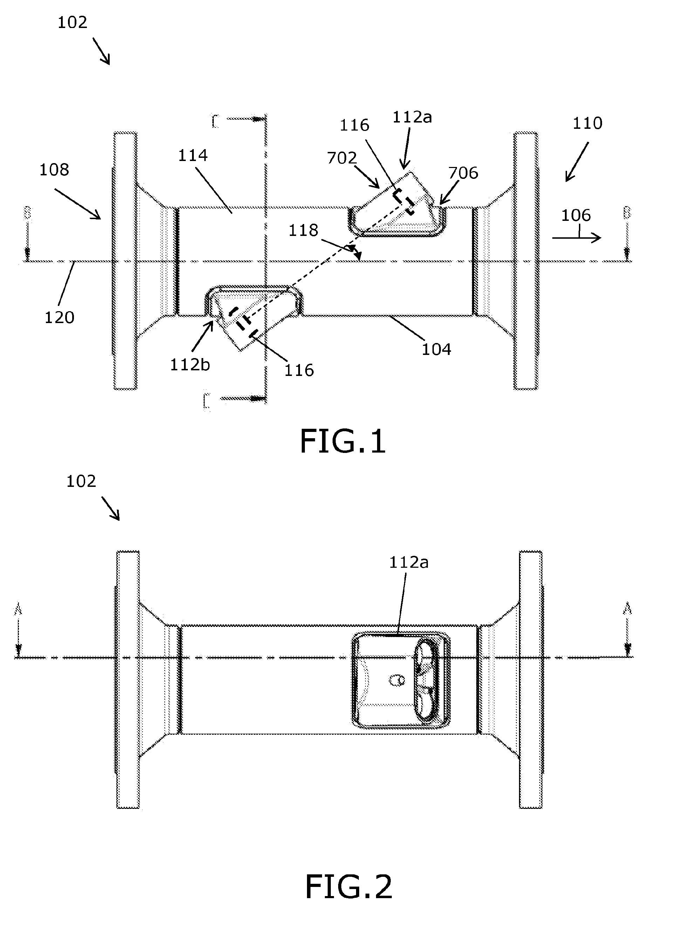

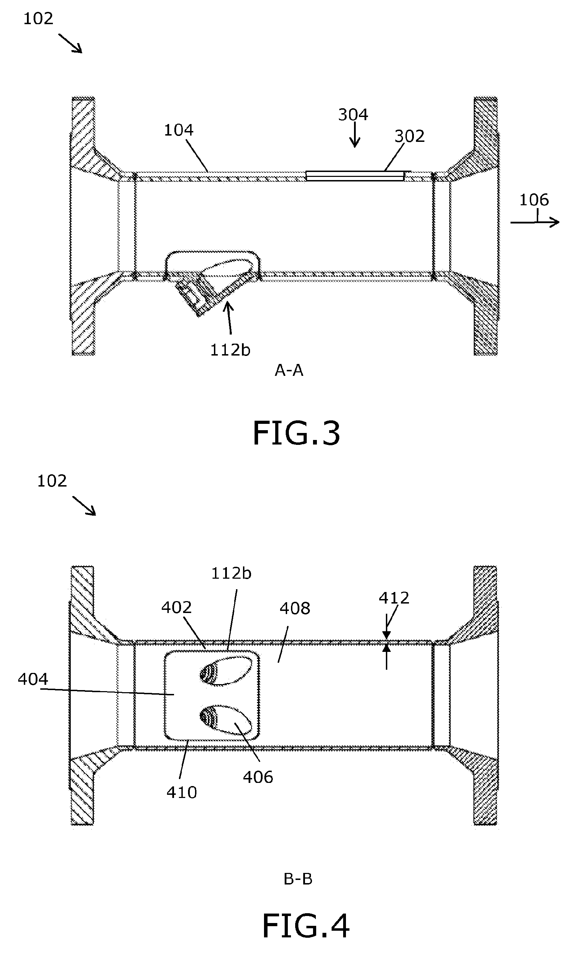

FIG. 1 to FIG. 4 show an ultrasonic consumption flow meter 102 with connection pieces 112a and 112b, each for connecting an ultrasound transducer with a flow meter housing 104. Particularly it follows that the flow meter housing 104 includes a through going hole 302, illustrated on FIG. 3, going through a material thickness 412, illustrated on FIG. 4, of the flow meter housing, the hole 302 being perpendicular or substantially perpendicular to a flow direction 106, the flow direction running from an inlet 108 to an outlet 110 of the flow meter housing. The ultrasonic flow meter 102 is provided for being equipped with a pair of ultrasound transducers 116, the pair being illustrated in figure 1. The flow meter includes a pair of connection pieces 112a and 112b, where each connection piece 112 connects the flow meter housing and one of the ultrasound transducers of the pair of ultrasound transducers. In the shown embodiment two ultrasound transducers are provided in each connection piece.

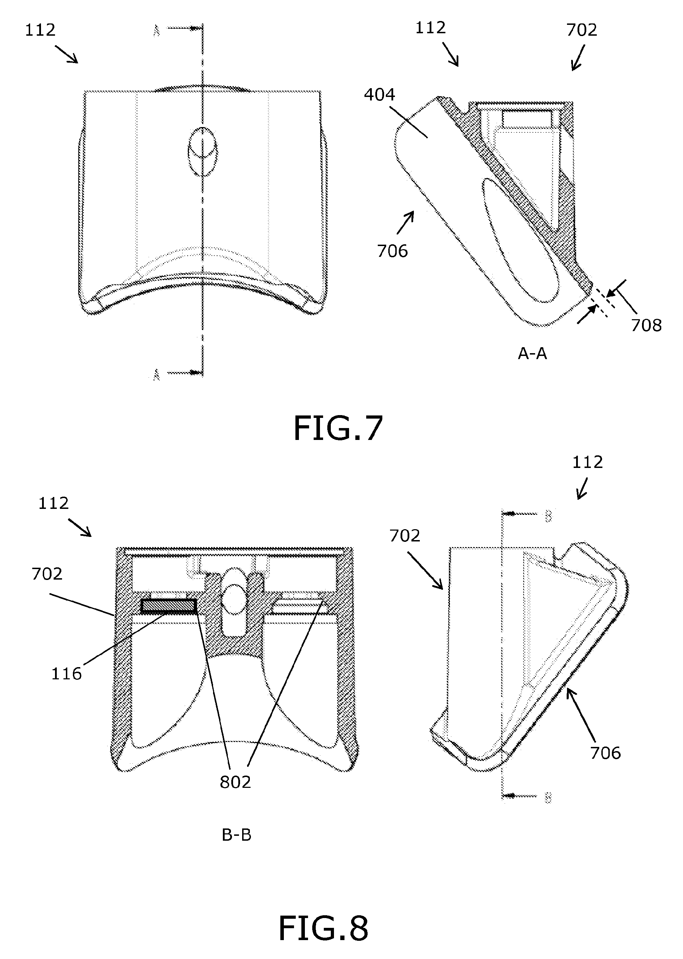

The connection pieces are casted, possibly in metal, and a connection piece is provided with a holder 702, shown in FIG. 1 and FIG. 7 for holding an ultrasound transducer 116, where the holder is casted with a precise acute angle 118 relative to the flow direction 106 and a base 706 of the connection piece. When mounted precisely, the holder of the connection piece consequently has a precise acute angle relative to the flow direction. The connection piece further includes the base 706 for positioning the connection piece 112 in the flow meter housing, the base having a size 402, illustrated in FIG. 4, and a material thickness 708.

An inner surface 404 of the connection piece is provided with a geometry which, apart from an opening 406 leading towards the ultrasound transducer 116, not visible in figure 4, is the same or substantially the same as a geometry of an inner surface 408 of the flow meter housing.

In FIG. 3, which is the cross sectional view A-A as indicated on figure 2, the hole 302 can be seen. The hole may be provided by laser cutting and preferably such as laser cutting the hole with an edge suited for welding the connection piece 112 to this edge of the flow meter housing 104. A direction of the hole is indicated with the arrow 304 being perpendicular to the flow direction.

FIG. 4 is a cross sectional view B-B as indicated on figure 1, and figure 4 illustrates that a projected size 402, seen perpendicular to the flow direction, of the base 706 may be the same in substantially a complete material thickness of the base and the same or substantially the same or just slightly smaller than the size of the hole 302 in the flow meter housing. This size of the base and the hole is provided in order for the connection piece to be mounted into the flow meter housing. Figure 4 also shows the openings 406 through which openings the ultrasound transducers 116, not visible in this figure, can be mounted on a mounting surface. The mounting surface is illustrated in figure 8 with reference number 802.

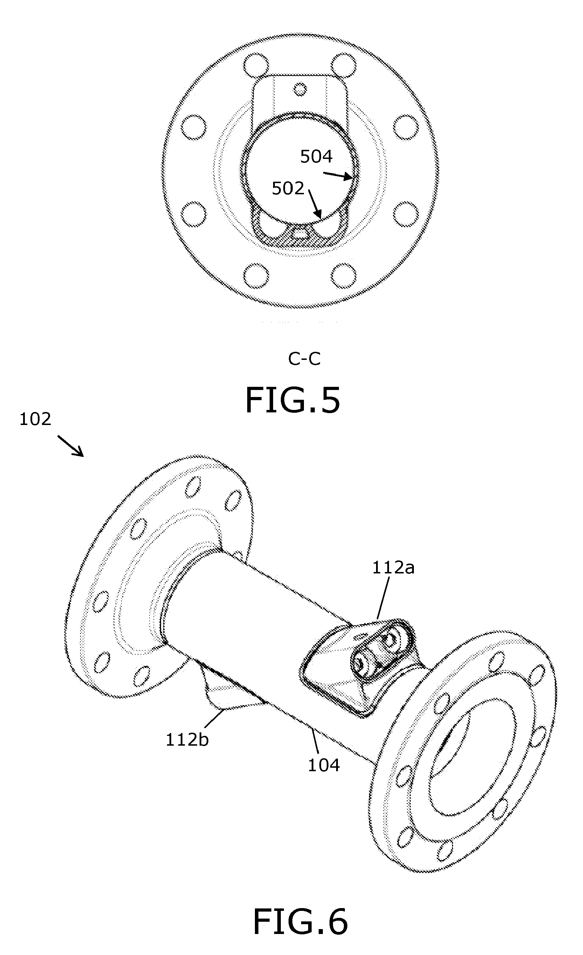

FIG. 5 is a cross sectional view C-C as indicated on figure 1, and it can be seen that a radius 502 of the connection piece 112 is the same or substantially the same as an inner radius 504 of the flow meter housing.

FIG. 6 is a perspective view of the flow meter and it is illustrated that the flow meter housing is a cylindrical pipe, preferably comprising metal.

FIG. 7 is on the left side a view of a connection piece, and in the right side a cross sectional view C-C as indicated on the left side of figure 7, and it can be seen that a material thickness 708 of the base 706, at least adjacent to a periphery of the base, is the same or substantially the same as the material thickness 412 of the flow meter housing.

FIG. 8 is on the left side a view of a cross sectional view B-B of the connection piece as indicated on the side view on the right side of figure 8, and it can be seen that the holder of the connection piece shown is provided for holding two ultrasound transducers. In this figure it is also illustrated in more detail that the holder 702 of the connection piece comprises two mounting surfaces 802, one for each of the ultrasound transducers used in one connection piece in this embodiment.

The holder is dimensioned to receive the ultrasound transducers, and each ultrasound transducer is mountable on the mounting surface so as to use a pressure within the flow meter housing 104 due to a flow of fluid in the flow meter housing, when the connection piece is connected to the housing and fluid flows in the housing of the flow meter, for pressing the ultrasound transducer towards the mounting surface 802.

It can also be seen that the periphery of the base 706 is provided with a rounding or similar form in order to prepare the connection piece for welding it to the housing when mounted in the hole 302 of the housing.

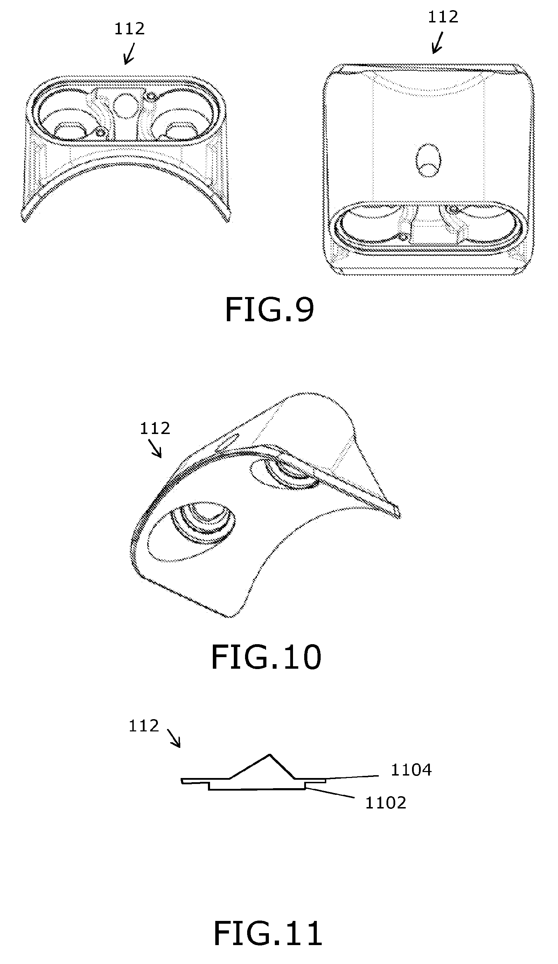

FIG. 9 is an end view and a top view of the connection piece and illustrates that possibly there is casted additional holes in the connection piece for electrical connections etc.

FIG. 10 is an embodiment of the connection piece where the acute angle between the base 706 and the holder 702 of the connection piece is increased.

FIG. 11 is an illustration of a further embodiment of the connection piece which includes a base with a lower and upper part, where only the lower part, i.e. only a part of the material thickness of the base, is provided with a size fitted for entering the hole 302 in the housing 104. The base is provided with a lower part 1102 with a size which is the same, substantially the same or just slightly smaller than the hole 302 in the flow meter housing and an upper part 1104 with a size which is larger than the hole 302 in the flow meter housing. The upper part forms a flange which can be provided with a form and geometry which partially extend over the outside surface 114 of the housing 104. The inner and/or outer surface of the flange may follow the form and geometry of an outside surface of the flow meter housing. The flange can e.g. be rigidly and fluid tightly connected to the housing by welding, gluing or by screws.

In short, it is disclosed herein that with a possible aim to provide an ultrasonic consumption flow meter 102 where precision of measurements can be improved while also providing a hassle free, precise and consistent assembly and positioning of components of the flow meter there is disclosed a flow meter housing 104 with a pair of holes 302 through a material thickness 412 of the housing, a pair of connection pieces, 112a and 112b, each connecting the flow meter housing and one ultrasound transducer 116. A connection piece is provided with a holder 702 for holding an ultrasound transducer and a base 706 for positioning the connection piece in the flow meter housing. An inner surface 404 of the base 706 has a geometry which, apart from an opening 406 leading towards the ultrasound transducer positioned in the holder, is the same or substantially the same as a geometry of an inner surface 408 of the flow meter housing.

Although the present invention has been described in connection with preferred embodiments, it is not intended to be limited to the specific form set forth herein. Rather, the scope of the present invention is limited only by the accompanying claims.

In this section, certain specific details of the disclosed embodiment are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality.

## Claims

1. An ultrasonic consumption flow meter (102) for measuring a consumption of fluid, the flow meter comprising
- a flow meter housing (104) with a pair of through going holes (302) going through a material thickness (412) of the flow meter housing, each hole (302) being perpendicular or substantially perpendicular to a flow direction (106), the flow direction running from an inlet (108) to an outlet (110) of the flow meter housing (104),
- a pair of ultrasound transducers,
- a pair of connection pieces, each connection piece (112) connecting the flow meter housing and one of the ultrasound transducers of the pair of ultrasound transducers, wherein the connection pieces are casted and a connection piece is provided with
- a holder (702) for holding an ultrasound transducer (116), the holder having an acute angle (118) relative to the flow direction (106),
- a base (706) for positioning the connection piece (112) in the flow meter housing, the base having a size (402) and a material thickness (708),
- an inner surface (404) with a geometry which, apart from an opening (406) leading towards the ultrasound transducer (116), is the same or substantially the same as a geometry of an inner surface (408) of the flow meter housing.

2. An ultrasonic consumption flow meter according to claim 1, wherein the size (402) of the base, at least in a part (1102) of the material thickness (708) of the base (706), is the same, substantially the same or just slightly smaller than the hole (302) in the flow meter housing.

3. An ultrasonic consumption flow meter according to any of the preceding claims, wherein the material thickness (708) of the base (706), at least adjacent to a periphery (410) of the base, is the same or substantially the same as the material thickness (412) of the flow meter housing.

4. An ultrasonic consumption flow meter according to claim 1, wherein the base is provided with a lower part (1102) with a size which is the same, substantially the same or just slightly smaller than the hole (302) in the flow meter housing and an upper part (1104) with a size which is larger than the hole (302) in the flow meter housing.

5. An ultrasonic consumption flow meter according to claim 4, wherein the upper part (1104) is a flange partially extending over an outside surface (114) of the flow meter housing and provided for connection of the connection piece (112) to the flow meter housing, such as by screwing, gluing or welding the flange to the flow meter housing.

6. An ultrasonic consumption flow meter according to any of the preceding claims, wherein an inner convexity or radius (502) of the connection piece (112) is the same or substantially the same as the convexity or inner radius (504) of the flow meter housing.

7. An ultrasonic consumption flow meter (102) according to any of the preceding claims, wherein the holder (702) is provided for holding two or more ultrasound transducers in order for the two or more ultrasound transducers to transmit and/or receive ultrasound in or from parallel or substantially parallel directions.

8. An ultrasonic consumption flow meter according to any of the preceding claims, wherein the holder (702) of the connection piece comprises a mounting surface (802) which is dimensioned to receive the ultrasound transducer (116), and the ultrasound transducer is mountable on the mounting surface so as to use a pressure within the flow meter housing (104) due to a flow of fluid in the flow meter housing for pressing the ultrasound transducer towards the mounting surface (802).

9. A method of assembling an ultrasonic consumption flow meter (102) for measuring a consumption of fluid, the method comprising
- providing and positioning a flow meter housing (104) with a pair of through going holes, each hole (302) going through a material thickness (412) of the flow meter housing, each hole (302) being perpendicular or substantially perpendicular to a flow direction (106), the flow direction running from an inlet (108) to an outlet (110) of the flow meter,
- providing a pair of connection pieces (112a, 112b), each for connecting the flow meter housing and an ultrasound transducer (116) and
- mounting the ultrasound transducer (116) in a holder (702) for holding the ultrasound transducer in each of the connection pieces,
- mounting one of the connection pieces of the pair of connection pieces in one of the through going holes of the pair of through going holes by a movement of the connection piece (112) parallel with a direction (304) of the through going hole (302) and into the through going hole,
- connecting the connection piece (112) to the flow meter housing (104) rigidly and fluid tightly.

10. A method of assembling an ultrasonic consumption flow meter according to claim 9, wherein mounting the ultrasound transducer (116) in the holder (702) is provided through an opening (406) in an inner surface (404) of the connection piece (112) and towards a mounting surface (802), the mounting surface (802) being dimensioned to receive the ultrasound transducer (116) and for using a pressure within the flow meter housing (104) due to a flow of fluid in the flow meter housing for pressing the transducer (116) towards the mounting surface (802).

11. A method of assembling an ultrasonic consumption flow meter according to any of the claims 9 or 10, wherein the connection piece is provided with a base (706) with a size (402), where the size of the base is the same, substantially the same or just slightly smaller than the hole (302) in the flow meter housing, and wherein the method comprises
- inserting the base (706) of the connection piece (112) into the through going hole (302) of the flow meter housing (104) and stopping the insertion when a geometry of at least part of an inner surface (404) of the connection piece (112) is flush with at least part of an inner surface (408) of the flow meter housing.

12. A method of assembling an ultrasonic flow meter according to any of the preceding claims 9-11, wherein connecting the flow meter housing (104) and the connection piece is provided by welding the connection piece (112) to the flow meter housing.

13. A method of assembling an ultrasonic flow meter according to any of the preceding claims 9-12, wherein providing the hole (302) in the flow meter housing is provided by laser cutting the hole, such as laser cutting the hole with an edge suited for welding the connection piece (112) to this edge of the flow meter housing (104).

14. A method of assembling an ultrasonic flow meter according to any of the preceding claims 9-13, wherein mounting the ultrasound transducer (116) in the connection piece (112) is provided prior to welding the connection piece (112) to the flow meter housing (104).
